# EUROPÄISCHE PATENTANMELDUNG

(11) **EP 4 190 717 A1**
(43) Veröffentlichungstag der Anmeldung: **07.06.2023**
(21) Anmeldenummer: 22209282.7
(22) Anmeldetag: 24.11.2022
(51) Int. Cl.: B65F 1/10, B65G 11/02, G07F 7/06

(54) **LEERGUTANNAHMEVORRICHTUNG**

(30) Priorität: 29.11.2021 DE 102021131287
(71) Anmelder: Wincor Nixdorf International GmbH, 33106 Paderborn (DE)
(72) Erfinder: SCHRÖDER, Berthold, 98693 Ilmenau (DE); ALMEROTH, Klaus, 98693 Ilmenau (DE); MAHNKE, Ivo, 98693 Ilmenau - Roda (DE); FRANKE, Volker, 99310 Wipfratal (DE)
(74) Vertreter: Viering, Jentschura & Partner mbB Patent- und Rechtsanwälte

(57) **Zusammenfassung**

Eine Leergutannahmevorrichtung (10) weist auf: einen eine Seitenwandanordnung und einen Boden aufweisenden Aufnahmebehälter (12) zum Aufnehmen von Leergut und eine Leerguttransportanordnung (16) zum Transportieren von in die Leergutannahmevorrichtung (10) eingeführtem Leergut zu dem Aufnahmebehälter (12) entlang eines Leerguttransportweges (T), wobei die Leerguttransportanordnung (16) aufweist: ein an der Seitenwandanordnung bereitgestelltes Führungselement (16a), das zum Boden des Aufnahmebehälters (12) hin abschüssig geneigt ist, und eine Führungsbahn (16b), die dem Führungselement (16a) entlang des Leerguttransportweges (T) vorgelagert ist, wobei die Führungsbahn (16b) ein entlang des Leerguttransportweges (T) vom Führungselement (16a) abgewandtes erstes Ende und ein entlang des Leerguttransportweges (T) dem Führungselement (16a) zugewandtes zweites Ende aufweist und wobei die Führungsbahn (16b) zwischen dem ersten Ende und dem zweiten Ende in wenigstens einem Abschnitt entlang des Leerguttransportweges (T) eine negative Steigung aufweist.

## Beschreibung

Die vorliegende Erfindung betrifft eine Leergutannahmevorrichtung.

Die Vermeidung von Einwegverpackungen ist ein wesentlicher Ansatz bei der Schonung von Ressourcen. In diesem Zusammenhang spielen Mehrwegbehälter, wie etwa Mehrwegflaschen, eine zentrale Rolle. Die automatisierte Rücknahme von Mehrwegbehältern mit Hilfe von Leergutannahmevorrichtungen stellt dabei einen zentralen Aspekt dar. Da Mehrwegbehälter oft aus zerbrechlichen Materialien, wie etwa Glas, hergestellt sind, besteht jedoch bei der Rücknahme durch eine Leergutannahmevorrichtung stets die Gefahr einer Beschädigung der Mehrwegbehälter und einer hohen Geräuschentwicklung.

Ein beispielhaftes Aufnahmesystem für Getränkebehältnisse aus Glas ist aus DE 20 2014 003 528 U1 bekannt. Dieses weist einen Sammelbehälter, ein Abrollelement und eine als Endlosband ausgebildete Zuführung auf, die dem Abrollelement entlang eines Zuführweges von Getränkebehältnissen unmittelbar vorgelagert ist. Über die Zuführung zu dem Abrollelement transportierte Getränkebehältnisse gelangen über das Abrollelement in den Sammelbehälter.

Aufgabe der vorliegenden Erfindung ist die Bereitstellung einer Leergutannahmevorrichtung mit im Vergleich zum Stand der Technik vereinfachtem Aufbau.

Gemäß der vorliegenden Erfindung wird diese Aufgabe durch eine Leergutannahmevorrichtung gelöst, welche aufweist: einen eine Seitenwandanordnung und einen Boden aufweisenden Aufnahmebehälter zum Aufnehmen von Leergut und eine Leerguttransportanordnung zum Transportieren von in die Leergutannahmevorrichtung eingeführtem Leergut zu dem Aufnahmebehälter entlang eines Leerguttransportweges, wobei die Leerguttransportanordnung aufweist: ein an der Seitenwandanordnung bereitgestelltes Führungselement, das zum Boden des Aufnahmebehälters hin abschüssig geneigt ist, und eine Führungsbahn, die dem Führungselement entlang des Leerguttransportweges vorgelagert, optional unmittelbar vorgelagert, ist, wobei die Führungsbahn ein entlang des Leerguttransportweges vom Führungselement abgewandtes erstes Ende und ein entlang des Leerguttransportweges dem Führungselement zugewandtes zweites Ende aufweist und wobei die Führungsbahn zwischen dem ersten Ende und dem zweiten Ende in wenigstens einem Abschnitt entlang des Leerguttransportweges, d.h. in einer Leerguttransportrichtung von dem ersten Ende zu dem zweiten Ende der Führungsbahn, eine negative Steigung aufweist.

Bei einer erfindungsgemäßen Leergutannahmevorrichtung kann Leergut zu dem Führungselement über die Führungsbahn, die dem Führungselement entlang des Leerguttransportweges vorgelagert ist, transportiert werden, wobei der Transport entlang der Führungsbahn aufgrund der negativen Steigung ausschließlich aufgrund einer Hangabtriebskraft erfolgen kann. Daher kann auf eine aus dem Stand der Technik bekannte Zuführung mit einem aktiv angetriebenen Förderband in einem Bereich vor bzw. unmittelbar vor dem Führungselement verzichtet werden. Hierdurch kann daher eine Leergutannahmevorrichtung mit einem im Vergleich zum Stand der Technik vereinfachten Aufbau bereitgestellt werden.

Die Führungsbahn und das Führungselement können als voneinander gesonderte Bauteile ausgebildet sein bzw. werden, wodurch Herstellung und Montage von Führungsbahn und Führungselement einfach gestaltet werden können. Ferner können die Führungsbahn und das Führungselement derart montiert sein, dass sie zumindest im Betrieb der Leergutannahmevorrichtung eine feste Positionsbeziehung zueinander haben. Mit anderen Worten, die Leergutannahmevorrichtung kann derart eingerichtet sein, dass eine aktive Bewegung der Führungsbahn oder eines Abschnitts der Führungsbahn, etwa mittels eines Motors, nicht erforderlich ist und daher nicht implementiert ist. Führungsbahn und Führungselement können daher als statische Bauteile ausgebildet sein.

Derjenige Abschnitt der Führungsbahn mit negativer Steigung kann einen Winkel mit einer horizontalen Richtung im Bereich von 10° bis 30°, optional zwischen 15° bis 30°, weiter optional zwischen 15° bis 25°, einschließen. Als horizontale Richtung kann eine zur Schwerkraftrichtung orthogonale Richtung definiert sein.

Die Oberfläche der Führungsbahn oder/und die Oberfläche des Führungselements können einen Reibungskoeffizienten (Gleitreibungskoeffizient oder/und Haftreibungskoeffizient) im Bereich zwischen 0,05 und 0,5, optional zwischen 0,1 und 0,5, weiter optional zwischen 0,1 und 0,3, aufweisen. Als Materialien für die Führungsbahn oder/und das Führungselement eignen sich allgemein Kunststoff, Metall, Holz und dgl. Diejenigen Oberflächen der Führungsbahn oder/und des Führungselements, an welchen zu transportierendes Leergut entlanggleiten soll, können mit einem vorbestimmten Profil versehen sein, wodurch ein Reibungskoeffizient dieser Oberflächen gezielt eingestellt werden kann. Beispielsweise können die Führungsbahn oder/und das Führungselement aus oder mit einem Wabenblech gebildet sein. Die Oberflächen, entlang welcher Leergut transportiert werden soll, können auch durch eine Oberflächenbeschichtung, z.B. aus Teflon, etwa in Form eines Teflon-Bandes, bereitgestellt sein.

Mit den vorangehend definierten Neigungswinkeln oder/und den vorangehend definierten Reibungskoeffizienten kann eine Transportgeschwindigkeit von zu transportierendem Leergut gezielt beeinflusst werden, etwa in Abhängigkeit von der Art des zu transportierenden Leerguts (z.B. in Anhängigkeit davon, ob es sich um Leergut aus Glas oder Kunststoff handelt), dem Gewicht des zu transportierenden Leerguts (im Allgemeinen zwischen 50 g und 0,5 kg) oder/und der Anfangsgeschwindigkeit, mit welcher Leergut der Führungsbahn zugeführt wird. In einer beispielhaften Ausführungsform kann die Anfangsgeschwindigkeit, mit welcher Leergut der Führungsbahn zugeführt wird, in einem Bereich zwischen 0,6 und 1 m/min liegen.

Die Führungsbahn und das Führungselement können derart ausgebildet und relativ zueinander montiert sein, dass die Führungsbahn entlang einer ersten Richtung eine negative Steigung aufweist und das Führungselement entlang einer zu der ersten Richtung orthogonalen zweiten Richtung eine negative Steigung aufweist.

Ein besonders einfacher Aufbau kann dadurch erzielt werden, dass die Führungsbahn zwischen dem ersten Ende und dem zweiten Ende entlang des Leerguttransportweges, d.h. in einer Leerguttransportrichtung, eine konstante negative Steigung aufweist.

Um die Leerguttransportgeschwindigkeit entlang der Führungsbahn gezielt beeinflussen zu können, kann in Weiterbildung der Erfindung vorgesehen sein, dass die Führungsbahn zwischen dem ersten Ende und dem zweiten Ende entlang des Leerguttransportweges eine sich verändernde Steigung aufweist. Die Steigung der Führungsbahn entlang des Leerguttransportweges kann dabei derart ausgestaltet sein, dass eine Beschleunigung des zu transportierenden Leerguts entlang der Führungsbahn zu dem Führungselement hin abnimmt, um sicherzustellen, dass das das Führungselement erreichende Leergut eine derart passende Geschwindigkeit aufweist, dass das Leergut entlang des Führungselements in den Aufnahmebehälter abrollt oder abgleitet und nicht aufgrund einer zu hohen Geschwindigkeit beim Verlassen der Führungsbahn über das Führungselement am Aufnahmebehälter vorbei rollt oder gleitet.

Die Ausgestaltung der Führungsbahn kann dabei derart sein, dass die Führungsbahn am ersten Ende eine negative erste Steigung und am zweiten Ende eine negative zweite Steigung aufweist, wobei die erste Steigung einen größeren Betrag als die zweite Steigung aufweist.

Alternativ kann vorgesehen sein, dass die Führungsbahn am zweiten Ende eine verschwindende Steigung, d.h. eine Steigung von im Wesentlichen gleich Null, oder eine positive Steigung entlang des Leerguttransportweges, d.h. in Richtung zu dem zweiten Ende hin, aufweist. Durch eine positive Steigung der Führungsbahn entlang des Leerguttransportweges kann für eine Abbremsung des Leerguts durch die Führungsbahn selbst entlang des Leerguttransportweges gesorgt werden. Für eine Abbremsung des Leerguts kann auch dadurch gesorgt werden, dass das Führungselement zu dem zweiten Ende der Führungsbahn hin abschüssig geneigt ist. Ferner können ein oder mehrere Umlenkelemente (Prallplatten) bereitgestellt sein, um Leergut entlang des Führungselements in den Aufnahmebehälter zu lenken.

Um eine Beschädigung von in den Aufnahmebehälter eingeführtem Leergut, wie etwa Glasbruch, vermeiden zu können, kann vorgesehen sein, dass der Boden des Aufnahmebehälters höhenverstellbar ist, um eine Fallhöhe im Aufnahmebehälter minimieren zu können. Der Aufbau kann dabei derart sein, dass die Leergutannahmevorrichtung ferner aufweist: eine um eine Trommelachse drehbare Trommel, die an einem ersten Seitenwandabschnitt der Seitenwandanordnung bereitgestellt ist, wobei der Boden einen flexiblen Boden aufweist, der aus einer flexiblen Materialbahn gebildet ist, die an einem ersten Endabschnitt mit der Trommel verbunden ist und durch eine Drehung der Trommel auf die Trommel aufwickelbar oder von der Trommel abwickelbar ist und an einem zweiten Endabschnitt mit einem zweiten Seitenwandabschnitt der Seitenwandanordnung verbunden ist. Durch die Bereitstellung eines derartigen höhenverstellbaren Bodens kann eine Beschädigung von Leergut auch durch die Beschaffenheit des Bodens verhindert werden, da die flexible Materialbahn beim Einführen von Leergut nachgeben und somit einen harten Aufprall verhindern kann.

Die flexible Materialbahn kann zu Reinigungszwecken lösbar mit dem zweiten Seitenwandabschnitt verbunden sein.

Um einen Verschleiß der flexiblen Materialbahn aufgrund einer Höhenverstellung des Bodens unterdrücken zu können, kann vorgesehen sein, dass die Leergutannahmevorrichtung ferner eine um eine Umlenktrommelachse drehbare Umlenktrommel zum Führen der flexiblen Materialbahn zu der Trommel aufweist. Hierdurch kann unerwünschte Reibung, etwa an der Seitenwandanordnung, infolge einer Höhenverstellung des Bodens verhindert werden, wodurch Verschleiß unterdrückt werden kann.

Die flexible Materialbahn kann derart an der Umlenktrommel und der Trommel geführt sein, dass sich bei einer Höhenverstellung des flexiblen Bodens die Trommel und die Umlenktrommel gleichsinnig drehen, d.h. dass der flexible Boden durch eine gleichsinnige Drehung von Trommel und Umlenktrommel höhenverstellbar ist. Hierdurch kann eine Drehung der Umlenktrommel und der Trommel auf einfache Weise synchronisiert werden. Ferner kann hierdurch auch sichergestellt werden, dass die flexible Materialbahn eine die Umlenktrommelachse und die Trommelachse verbindende Gerade oder Ebene in einem Bereich zwischen der Umlenktrommel und der Trommel nicht kreuzt, wodurch bei einer vorgegebenen Höhenstellung des flexiblen Bodens im Aufnahmebehälter eine größere Materialbahnoberfläche, die dazu vorgesehen ist, bei einer vorgegebenen Höhenstellung des flexiblen Bodens im Aufnahmebehälter mit Leergut in Kontakt zu treten, in einem nicht aufgewickelten Zustand vorliegt als im Falle einer Führung, bei welcher die Materialbahn die die Umlenktrommelachse und die Trommelachse verbindende Gerade oder Ebene in einem Bereich zwischen der Trommel und der Umlenktrommel kreuzt. Hierdurch kann eine Menge an Fremdstoffen, wie etwa an Glassplittern, die zwischen aufgewickelten Materialbahnlagen geraten, minimiert werden, wodurch eine Beschädigung der Materialbahn aufgrund dieser Fremdstoffe unterdrückt werden kann.

In Weiterbildung der Erfindung kann vorgesehen sein, dass das Führungselement an dem ersten Seitenwandabschnitt bereitgestellt ist, optional in Schwerkraftrichtung oberhalb der Trommel bereitgestellt ist. Wie vorangehend ausgeführt, ist die flexible Materialbahn am ersten Seitenwandabschnitt mit der Trommel verbunden und kann daher auf der Seite des ersten Seitenwandabschnitts eine abfallende Flanke bilden. Diese kann somit als abschüssige Rampe für in den Aufnahmebehälter eingegebenes Leergut dienen und daher die Krafteinwirkung auf in den Aufnahmebehälter eingegebenes Leergut unterdrücken.

Weiter kann vorgesehen sein, dass die Leergutannahmevorrichtung aufweist: eine Steuervorrichtung sowie einen ersten und einen zweiten mit der Steuervorrichtung in Signalaustauschverbindung stehenden Füllstandsensor, die dazu eingerichtet sind, einen Leergutfüllstand an mehreren Positionen in dem Aufnahmebehälter zu erfassen und den Leergutfüllstand widerspiegelnde Füllstandsignale an die Steuervorrichtung auszugeben, wobei die Steuervorrichtung dazu eingerichtet ist, eine Drehung der Trommel zum Aufwickeln oder Abwickeln der flexiblen Materialbahn nach Maßgabe der Füllstandsignale zu steuern.

Durch diese Ausgestaltung kann die Höhenposition des flexiblen Bodens im Aufnahmebehälter in Abhängigkeit von einem Leergutfüllstand gezielt eigestellt werden, so dass eine Fallhöhe von in den Aufnahmebehälter eingegebenem Leergut im Wesentlichen unabhängig vom Leergutfüllstand minimiert werden kann. Durch den Einsatz eines ersten und eines zweiten Füllstandsensors kann ein Leergutfüllstand im Aufnahmebehälter präzise erfasst werden.

Die Füllstandsensoren können derart positioniert sein, dass ein Abstand des ersten Füllstandsensors zu dem ersten Seitenwandabschnitt kleiner als ein Abstand des ersten Füllstandsensors zu dem zweiten Seitenwandabschnitt ist. Optional kann ein Abstand des zweiten Füllstandsensors zu dem ersten Seitenwandabschnitt größer als der Abstand des ersten Füllstandsensors zu dem ersten Seitenwandabschnitt sein. Hierdurch kann der Leergutfüllstand an mehreren Positionen erfasst werden, wodurch eine lokale Leergutansammlung im Aufnahmebehälter verhindert werden kann.

Die Leergutannahmevorrichtung kann ferner eine im Aufnahmebehälter unterhalb des flexiblen Bodens angeordnete Restflüssigkeitsaufnahmewanne zum Aufnehmen von aus dem Leergut ausgelaufener Restflüssigkeit aufweisen. Die Restflüssigkeitsaufnahmewanne kann aus dem Aufnahmebehälter entnehmbar sein, was ein Entsorgen der Restflüssigkeit einfach gestalten kann.

Die vorliegende Erfindung wird nachfolgend im Detail durch Bezugnahme auf die Zeichnungen beschrieben. Dabei sind:
- Figur 1: eine schematische Darstellung einer beispielhaften Leergutannahmevorrichtung,
- Figur 2: eine Darstellung eines mit Leergut gefüllten Aufnahmebehälters,
- Figur 3: eine Ansicht des Aufnahmebehälters, des Führungselements und der Führungsbahn bei Betrachtung entlang des Pfeils III in Figur 1,
- Figur 4: eine Ansicht gemäß Figur 3 mit einer gegenüber Figur 3 abweichenden Stellung des Führungselements und
- Figur 5: eine Ansicht gemäß Figur 3 mit einer gegenüber Figur 4 abgewandelten Führungsbahn.

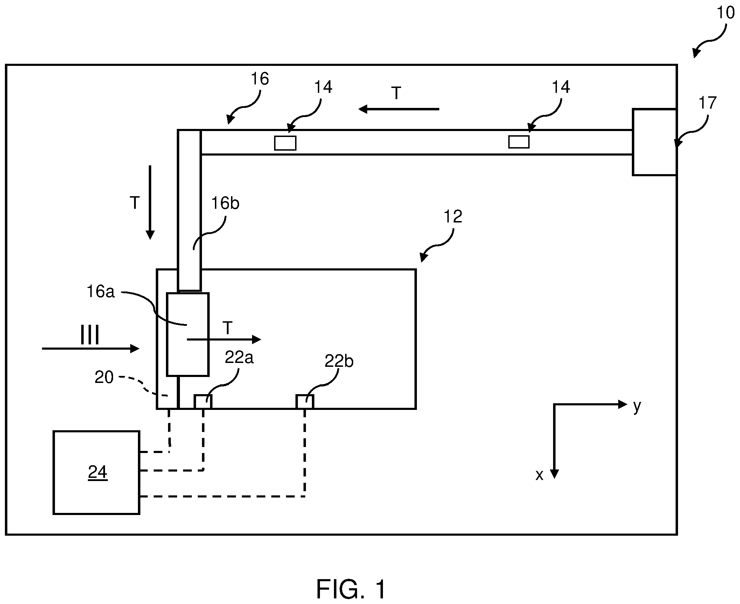

Figur 1 ist eine schematische Darstellung einer beispielhaften Leergutannahmevorrichtung 10, welche aufweist: einen Aufnahmebehälter 12 zum Aufnehmen von Leergut 14 und eine Leerguttransportanordnung 16 zum Transportieren von über eine Zuführöffnung 17 in die Leergutannahmevorrichtung 10 eingeführtem Leergut 14 zu dem Aufnahmebehälter 12 entlang eines Leerguttransportweges T. Bei dem Leergut 14 kann es sich beispielsweise um Pfandflaschen handeln. Die Leerguttransportanordnung 16 kann beispielsweise motorisch angetriebene Förderbänder, etwa Endlosbänder, und/oder geneigte Abschnitte, etwa schiefe Ebenen, die eine Transportwirkung basierend auf einer Hangabtriebskraft bereitstellen, aufweisen.

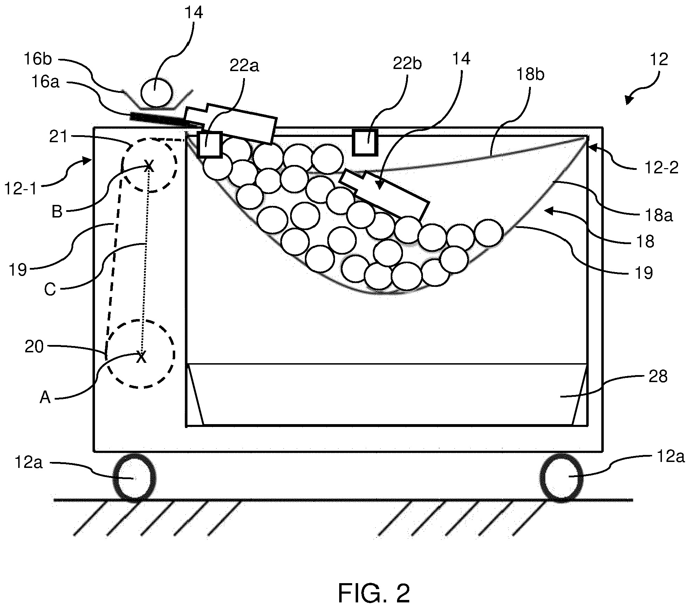

Der Aufnahmebehälter 12 ist schematisch in Figur 2 dargestellt. Wie in Figur 2 gezeigt, kann der Aufnahmebehälter 12 einen flexiblen Boden 18 aufweisen, auf welchem sich das über die Leerguttransportanordnung 16 transportierte Leergut 14 ansammelt. Der flexible Boden 18 kann beispielsweise aus einer flexiblen Materialbahn 19 gebildet sein, welche sich zwischen einem ersten Seitenwandabschnitt 12-1 und einem zweiten Seitenwandabschnitt 12-2 des Aufnahmebehälters 12 erstreckt. Am ersten Seitenwandabschnitt 12-1 des Aufnahmebehälters 12 kann eine drehbare Trommel 20 bereitgestellt sein, welche um eine Trommelachse (Längsachse) A derselben drehbar ist, etwa mittels eines nicht dargestellten Elektromotors. Durch eine Drehung der Trommel 20 um ihre Längsachse A kann die flexible Materialbahn 19 auf die Trommel 20 aufgewickelt bzw. von ihr abgewickelt werden. In der in Figur 2 gezeigten Ausführungsform ist die flexible Materialbahn 19 am ersten Seitenwandabschnitt 12-1 um die Trommel 20 gewickelt und mit dem zweiten Seitenwandabschnitt 12-2 verbunden.

Durch Aufwickeln der Materialbahn auf die Trommel 20 bzw. durch Abwickeln der Materialbahn von der Trommel 20 kann die Höhe des flexiblen Bodens 18, d.h. seine Position in Schwerkraftrichtung, verstellt werden. Die Schwerkraftrichtung entspricht in Fig. 2 der vertikalen Richtung. Die Höhenverstellbarkeit des Bodens 18 ist in Figur 2 durch die Bezugszeichen 18a und 18b angedeutet. In dem mit dem Bezugszeichen 18a angedeuteten Zustand ist der Boden 18 im Vergleich zu dem mit dem Bezugszeichen 18b angedeuteten Zustand abgesenkt. Der Boden 18 kann von dem mit dem Bezugszeichen 18a angedeuteten Zustand durch Aufwickeln der Materialbahn 19 auf die Trommel 20 in den mit dem Bezugszeichen 18b angedeuteten Zustand überführt werden und kann von dem mit dem Bezugszeichen 18b angedeuteten Zustand durch Abwickeln der Materialbahn 19 von der Trommel 20 in den mit dem Bezugszeichen 18a angedeuteten Zustand überführt werden.

Durch die Bereitstellung eines derartigen höhenverstellbaren Bodens 18 kann eine Beschädigung des Leergut 14 verhindert werden, da die flexible Materialbahn 19 beim Einführen von Leergut 14 nachgeben und somit einen harten Aufprall im Aufnahmebehälter 12 verhindern kann.

Die flexible Materialbahn 19 kann zu Reinigungszwecken lösbar mit dem zweiten Seitenwandabschnitt 12-2 verbunden sein.

Um einen Verschleiß der flexiblen Materialbahn 19 aufgrund einer Höhenverstellung des Bodens 18 unterdrücken zu können, kann vorgesehen sein, dass die Leergutannahmevorrichtung 10 ferner eine um eine Umlenktrommelachse (Längsachse) B drehbare Umlenktrommel 21 zum Führen der flexiblen Materialbahn 19 zu der Trommel 20 aufweist. Hierdurch kann unerwünschte Reibung, etwa an dem ersten Seitenwandabschnitt 12-1, infolge einer Höhenverstellung des Bodens 18 verhindert werden, wodurch ein Verschleiß der Materialbahn 19 unterdrückt werden kann. Die Umlenktrommel 21 kann passiv oder ausschließlich passiv durch die Materialbahn 19 drehbar sein.

Die flexible Materialbahn 19 kann, wie in Figur 2 gezeigt, derart an der Umlenktrommel 21 und der Trommel 20 geführt sein, dass sich bei einer Höhenverstellung des flexiblen Bodens 18 die Trommel 20 und die Umlenktrommel 21 gleichsinnig um ihre jeweiligen Längsachsen, d.h. um die Trommelachse A bzw. die Umlenktrommelachse B, drehen. Hierdurch kann eine Drehung der Umlenktrommel 21 und der Trommel 20 auf einfache Weise synchronisiert werden und es kann auch sichergestellt werden, dass die flexible Materialbahn 19 eine die Umlenktrommelachse B und die Trommelachse A verbindende Gerade oder Ebene C in einem Bereich zwischen Trommel 20 und Umlenktrommel 21 nicht kreuzt, d.h. dass die flexible Materialbahn 19 auf die Trommel 20 auf einer von dem zweiten Seitenwandabschnitt 12-2 abgewandten Seite der Trommel 20 aufgewickelt wird. Hierdurch kann erreicht werde, dass bei einer vorgegebene Höhenstellung des flexiblen Bodens 18 eine größere Materialbahnoberfläche, die dazu vorgesehen ist, mit Leergut in Kontakt zu treten, in einem nicht aufgewickelten Zustand vorliegt als im Falle einer Führung, bei welcher die Materialbahn 19 die die Umlenktrommelachse B und die Trommelachse A verbindende Gerade oder Ebene C in einem Bereich zwischen Trommel 20 und Umlenktrommel 21 kreuzt, d.h. von einer dem zweiten Seitenwandabschnitt 12-2 zugewandten Seite der Trommel 20 auf die Trommel 20 aufgewickelt wird. Hierdurch kann eine Menge an Fremdstoffen, wie etwa an Glassplittern, die zwischen aufgewickelten Materialbahnlagen geraten, minimiert werden, wodurch eine Beschädigung der Materialbahn 19 aufgrund dieser Fremdstoffe unterdrückt werden kann.

Wie in den Figuren 1 und 2 gezeigt, weist die Leerguttransportanordnung 16 am Ende des Leerguttransportweges T ein Führungselement 16a auf, das zum flexiblen Boden 18 hin abschüssig geneigt ist, wodurch zugeführtes Leergut 14 gezielt in den Aufnahmebehälter 12 eingeführt werden kann. Um eine große Fallhöhe von in den Aufnahmebehälter 12 eingeführtem Leergut 14 zwischen Führungselement 16a und Boden 18 vermeiden zu können, kann der Boden 18 entsprechend einem Leergutfüllstand in dem Aufnahmebehälter 12, in seiner Höhe verstellt werden, so dass er mit zunehmendem Leergutfüllstand von einer oberen Stellung allmählich durch Abwickeln der Materialbahn 19 von der Trommel 20 abgesenkt wird.

Der Leergutfüllstand in dem Aufnahmebehälter 12 kann durch einen oder mehrere Füllstandsensoren 22a, 22b erfasst werden. Die Leergutannahmevorrichtung 10 kann ferner eine Steuervorrichtung 24 aufweisen, die mit dem einen oder den mehreren Füllstandsensoren 22a, 22b in Signalaustauschverbindung steht. Der eine oder die mehreren Füllstandsensoren 22a, 22b können dazu eingerichtet sein, den Leergutfüllstand an einer oder mehreren Positionen in dem Aufnahmebehälter 12 zu erfassen und den Leergutfüllstand widerspiegelnde Füllstandsignale an die Steuervorrichtung 24 auszugeben.

Die Steuervorrichtung 24 kann dazu eingerichtet sein, eine Drehung der Trommel 20 zum Aufwickeln oder Abwickeln der flexiblen Materialbahn 19 nach Maßgabe der Füllstandsignale zu steuern bzw. zu regeln. Die jeweiligen Signalaustauschverbindungen zwischen der Steuervorrichtung 24 einerseits und den Füllstandsensoren 22a, 22b bzw. der Trommel 20 andererseits sind in Figur 1 durch gestrichelte Linien angedeutet.

Wie in den Figuren 1 und 2 angedeutet, können mehrere Füllstandsensoren 22a, 22b, etwa ein erster Füllstandsensor 22a und ein zweiter Füllstandsensor 22b, bereitgestellt sein. Hierdurch kann der Leergutfüllstand an mehreren Positionen in dem Aufnahmebehälter 12 erfasst werden. Dadurch kann verhindert werden, dass sich zu große Leergutfüllstandunterschiede in dem Aufnahmebehälter 12 ausbilden, die durch Umkippen von aufgetürmtem Leergut zur Geräuschentwicklung beitragen können.

Die Positionierung der Füllstandsensoren 22a, 22b kann beispielsweise derart sein, dass ein Abstand des ersten Füllstandsensors 22a zu dem ersten Seitenwandabschnitt 12-1 kleiner ist als ein Abstand des ersten Füllstandsensors 22a zum zweiten Seitenwandabschnitt 12-2 ist. Der zweite Füllstandsensor 22b kann zwischen dem ersten Füllstandsensor 22a und dem zweiten Seitenwandabschnitt 12-2 angeordnet sein, etwa in einem mittleren Bereich zwischen dem ersten Seitenwandabschnitt 12-1 und dem zweiten Seitenwandabschnitt 12-2, d.h. ein Abstand des zweiten Füllstandsensors 22b zum ersten Seitenwandabschnitt 12-1 kann größer sein als der Abstand des ersten Füllstandsensors 22a zum ersten Seitenwandabschnitt 12-1.

Wie in Figur 2 gezeigt, weist der Boden 18 aufgrund seiner flexiblen Ausgestaltung eine konkave Form auf. Diese konkave Form kann für sanftes Einführen des Leerguts 14 in den Aufnahmebehälter 12 genutzt werden, indem das Leergut 14 entweder am ersten Seitenwandabschnitt 12-1 oder am zweiten Seitenwandabschnitt 12-2 in den Aufnahmebehälter 12 eingeführt wird. In der in den Figuren 1 und 2 gezeigten Ausführungsform ist das Führungselement 16a in Schwerkraftrichtung oberhalb der Trommel 20 angeordnet, d.h. am ersten Seitenwandabschnitt 12-1.

Der Aufnahmebehälter 12 kann weitere Sensoren aufweisen, die eine untere Endstellung des Bodens 18 signalisieren, wenn der Aufnahmebehälter 12 voll ist. Dies kann von der Steuervorrichtung 24 nach außen signalisiert werden, um eine Leerung des Aufnahmebehälters 12 zu veranlassen. Wie in Figur 2 gezeigt, kann der Aufnahmebehälter 12 mehrere Rollen 12a aufweisen, über welche dieser, beispielsweise zum Ausleeren, verfahrbar ist.

Wie vorangehend ausgeführt, kann bereits durch die flexible Ausgestaltung des Bodens 18 sowie durch die Konfiguration des Führungselements 16a und dessen konkrete Anordnung am Aufnahmebehälter 12 die Gefahr einer Beschädigung des Leerguts 14 minimiert sowie eine Geräuschentwicklung beim Einführen in den Aufnahmebehälter 12 unterdrückt werden.

Ein weiterer Faktor, welcher einen Einfluss auf Leergutbeschädigung und Geräuschentwicklung beim Einführen in den Aufnahmebehälter 12 hat, ist die Art und Weise, wie das Leergut 14 zu dem Führungselement 16a gelangt. In diesem Zusammenhang spielt insbesondere die Ausgestaltung der Leerguttransportanordnung 16 in einem dem Führungselement 16a vorgelagerten Bereich eine wichtige Rolle.

Wie in den Figuren 1 und 2 gezeigt, kann die Leerguttransportanordnung 16 eine entlang des Leerguttransportweges T dem Führungselement 16a vorgelagerte, etwa unmittelbar vorgelagerte, Führungsbahn 16b aufweisen, die zu dem Führungselement 16a abschüssig geneigt ist. Durch die abschüssige Neigung der Führungsbahn 16b zu dem Führungselement 16a hin, kann das zu transportierende Leergut 14 mittels Schwerkrafteinwirkung (Hangabtriebskraft) zu dem Führungselement 16a transportiert werden. Somit kann zumindest in diesem Bereich der Leerguttransportanordnung 16 auf motorische Antriebsmittel verzichtet werden, was zu einem einfachen Aufbau der Leergutannahmevorrichtung 10 beitragen kann.

Eine zu dem Führungselement 16a abschüssige Neigung bedeutet hier, dass die Führungsbahn 16b in wenigstens einem Abschnitt entlang des Leerguttransportweges T eine negative Steigung aufweist. Mit anderen Worten, die Führungsbahn 16b weist ein bezogen auf den Leerguttransportweg T vom Führungselement 16a abgewandtes erstes Ende 16b-1 und ein bezogen auf den Leerguttransportweg T dem Führungselement 16a zugewandtes zweites Ende 16b-2 auf, wobei die Führungsbahn 16b in wenigstens einem Abschnitt zwischen dem ersten Ende 16b-1 und dem zweiten Ende 16b-2 eine negative Steigung entlang des Leerguttransportweges T, d.h. in einer Leerguttransportrichtung von dem ersten Ende 16b-1 zu dem zweiten Ende 16b-2, aufweist.

Derjenige Abschnitt der Führungsbahn 16b mit negativer Steigung kann einen Winkel mit einer horizontalen Richtung im Bereich von 10° bis 30°, optional zwischen 15° bis 30°, weiter optional zwischen 15° bis 25°, einschließen. Eine horizontale Richtung kann hier als eine zur Schwerkraftrichtung orthogonale Richtung definiert sein.

Die Oberflächen der Führungsbahn 16b oder/und des Führungselements 16a können einen Reibungskoeffizienten (Gleitreibungskoeffizient oder/und Haftreibungskoeffizient) im Bereich zwischen 0,05 und 0,5, optional zwischen 0,1 und 0,5, weiter optional zwischen 0,1 und 0,3, aufweisen. Als Materialien für die Führungsbahn 16b oder/und das Führungselement 16a eignen sich allgemein Kunststoff, Metall, Holz und dgl. Diejenigen Oberflächen der Führungsbahn 16b oder/und des Führungselements 16a, an welchen zu transportierendes Leergut entlanggleiten soll, können mit einem vorbestimmten Profil versehen sein, wodurch ein Reibungskoeffizient dieser Oberflächen gezielt eingestellt werden kann. Beispielsweise können die Führungsbahn 16b oder/und das Führungselement 16a aus oder mit einem Wabenblech gebildet sein. Die Oberflächen, entlang welcher Leergut transportiert werden soll, können auch durch eine Oberflächenbeschichtung, z.B. aus Teflon, etwa in Form eines Teflon-Bandes, bereitgestellt sein.

Mit den vorangehend definierten Neigungswinkeln oder/und den vorangehend definierten Reibungskoeffizienten kann eine Transportgeschwindigkeit von zu transportierendem Leergut gezielt beeinflusst werden, etwa in Abhängigkeit von der Art des zu transportierenden Leerguts (z.B. in Anhängigkeit davon, ob es sich um Leergut aus Glas oder Kunststoff handelt), dem Gewicht des zu transportierenden Leerguts (im Allgemeinen zwischen 50 g und 0,5 kg) oder/und der Anfangsgeschwindigkeit, mit welcher Leergut der Führungsbahn 16b zugeführt wird. In einer beispielhaften Ausführungsform kann die Anfangsgeschwindigkeit, mit welcher Leergut der Führungsbahn 16b zugeführt wird, in einem Bereich zwischen 0,6 und 1 m/min liegen.

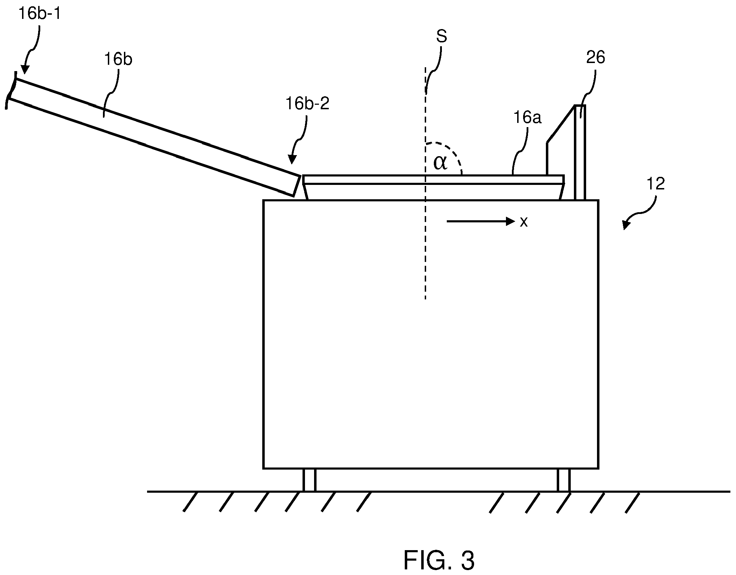

Die Führungsbahn 16b kann, wie in Figur 3 gezeigt, als schiefe Ebene mit einer im Wesentlichen konstanten negativen Steigung ausgebildet sein. In dieser Ausgestaltung ist die Führungsbahn 16b zum Führungselement 16a hin abschüssig geneigt, während das Führungselement 16a zum flexiblen Boden 18, d.h. zum Inneren des Aufnahmebehälters 12, hin abschüssig geneigt ist. Leergut 14, welches entlang der Führungsbahn 16b zum Führungselement 16a durch Schwerkrafteinwirkung (Hangabtriebskraft) transportiert wird, trifft beim Übergang auf das Führungselement 16a auf eine Fläche mit von der Führungsbahn 16b abweichender Neigung, wodurch das Leergut 14 abgebremst werden kann. Dies wiederum kann dazu beitragen, dass das Leergut 14 anschließend mit verringerter Geschwindigkeit in den Aufnahmebehälter 12 eintreten kann, wodurch die Gefahr einer Beschädigung des Leerguts 14 verringert sowie eine Geräuschentwicklung unterdrückt wird.

Eine Leerguttransportrichtung am zweiten Ende 16b-2 der Führungsbahn 16b kann von einer Transportrichtung entlang des Führungselements 16a abweichen. In der in Figur 1 gezeigten beispielhaften Ausführungsform sind die Führungsbahn 16b und das Führungselement 16a derart ausgebildet sein, dass die Führungsbahn 16b in einer ersten Richtung (x-Richtung) abschüssig geneigt ist und das Führungselement 16a in einer zu der ersten Richtung x orthogonalen zweiten Richtung (y-Richtung) abschüssig geneigt ist.

Das Führungselement 16a kann in x-Richtung eine Steigung von im Wesentlichen Null aufweisen, d.h. das Führungselement 16a schließt entlang der x-Richtung mit der Schwerkraftrichtung S einen Winkel α von im Wesentlichen 90° ein. Diese Ausgestaltung eignet sich etwa für solche Fälle, in denen die Transportgeschwindigkeit entlang der Führungsbahn 16b derart ist, dass nicht mit einem Ausbrechen des Leerguts 14 in x-Richtung über das Führungselement 16a hinaus zu rechnen ist oder für solche Fälle, in denen ein Umlenkelement 26, wie etwa eine Prallplatte, auf einer von der Führungsbahn 16b abgewandten Seite des Führungselements 16a bereitgestellt ist.

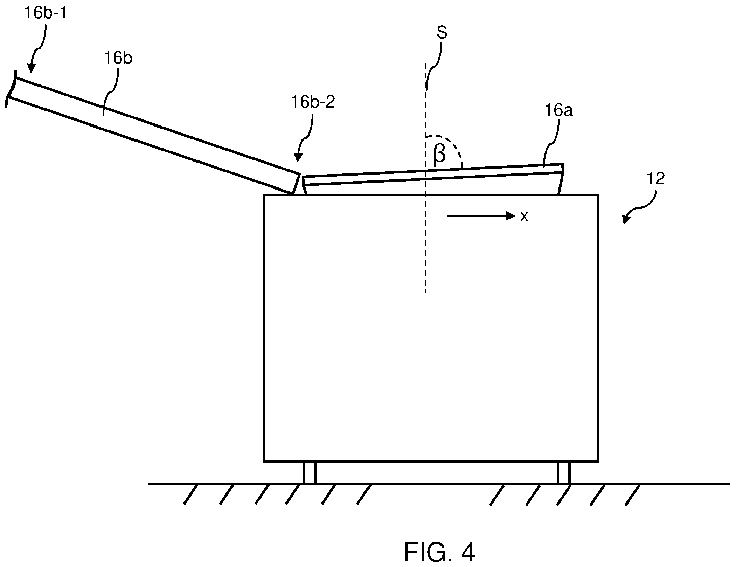

Das Führungselement 16a kann alternativ, wie in Figur 4 gezeigt, derart angeordnet sein, dass es zu dem zweiten Ende 16b-2 der Führungsbahn 16b hin abschüssig geneigt ist, d.h. dass es in x-Richtung zu dem zweiten Ende 16b-2 der Führungsbahn 16b hin eine negative Steigung aufweist. In dieser Ausführungsform schließt das Führungselement 16a entlang der x-Richtung mit der Schwerkraftrichtung einen Winkel β ein, welcher verschieden von 90° ist. Hierdurch stellt das Führungselement 16a für über die Führungsbahn 16b zugeführtes Leergut 14 eine Steigung dar, die eine zusätzliche Abbremswirkung bereitstellt. Diese Konfiguration kann im Vergleich zu der in Figur 3 gezeigten Ausgestaltung baulich einfacher zu realisieren sein, da hier auf eine Prallplatte verzichtet werden kann.

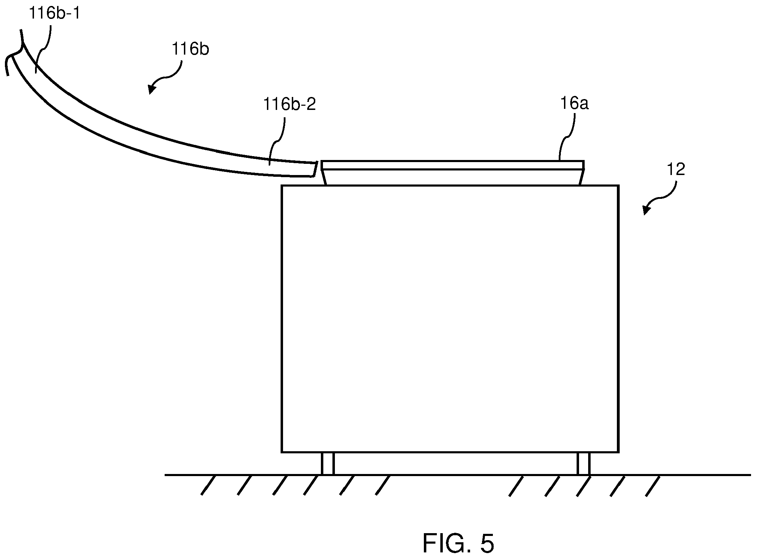

Die Geschwindigkeit von über die Leerguttransportvorrichtung 16 transportiertem Leergut 14 kann auch durch das Steigungsprofil der Führungsbahn gezielt beeinflusst werden. In der Ausgestaltung gemäß Figur 5, weist die Führungsbahn 116b im Gegensatz zu der in den Figuren 3 und 4 gezeigten Führungsbahn 16b keine konstante Steigung auf, sondern eine Steigung, die vom ersten Ende 116b-1 zu dem zweiten Ende 116b-2 hin abnimmt, d.h. die Führungsbahn 116b weist am ersten Ende 116b-1 eine negative erste Steigung auf, die betragsmäßig größer als eine negative zweite Steigung der Führungsbahn 116b am zweiten Ende 116b-2 ist. Hierdurch kann eine Beschleunigung von zugeführtem Leergut 14 bereits vor Erreichen des Führungselements 16a wirksam reduziert werden. Die Steigung am zweiten Ende 116b-2 kann optional im Wesentlichen gleich Null sein. Alternativ kann die Steigung am zweiten Ende 116b-2 positiv sein, wodurch ein Abbremseffekt am zweiten Ende der Führungsbahn 116b erzielt werden kann.

Wie in den Figuren 3 bis 5 angedeutet, können das Führungselement 16a und die Führungsbahn 16b, 116b als voneinander gesonderte Bauteile ausgebildet sein, wodurch für sowohl eine einfache Herstellung als auch eine einfache Montage dieser Bauteile gesorgt werden kann. Ferner kann das Führungselement 16a im Wesentlichen plattenförmig sein.

Wie in Figur 2 angedeutet, kann im Aufnahmebehälter 12 eine unterhalb des flexiblen Bodens 18 angeordnete Restflüssigkeitsaufnahmewanne 28 zum Aufnehmen von aus dem Leergut 14 ausgelaufener Restflüssigkeit bereitgestellt sein. Die Restflüssigkeitsaufnahmewanne 28 kann aus dem Aufnahmebehälter 12 entnehmbar sein, was ein Entsorgen der Restflüssigkeit einfach gestalten kann.

## Patentansprüche

1. Leergutannahmevorrichtung (10), aufweisend:
einen eine Seitenwandanordnung (12-1, 12-2) und einen Boden (18) aufweisenden Aufnahmebehälter (12) zum Aufnehmen von Leergut (14) und
eine Leerguttransportanordnung (16) zum Transportieren von in die Leergutannahmevorrichtung (10) eingeführtem Leergut (14) zu dem Aufnahmebehälter (12) entlang eines Leerguttransportweges (T),
wobei die Leerguttransportanordnung (16) aufweist:
ein an der Seitenwandanordnung (12-1, 12-2) bereitgestelltes Führungselement (16a), das zum Boden (18) des Aufnahmebehälters (12) hin abschüssig geneigt ist, und
eine Führungsbahn (16b; 116b), die dem Führungselement (16a) entlang des Leerguttransportweges (T) vorgelagert ist, wobei die Führungsbahn (16b; 116b) ein entlang des Leerguttransportweges (T) vom Führungselement (16a) abgewandtes erstes Ende (16b-1; 116b-1) und ein entlang des Leerguttransportweges (T) dem Führungselement (16a) zugewandtes zweites Ende (16b-2; 116b-2) aufweist und wobei die Führungsbahn (16b) zwischen dem ersten Ende (16b-1; 116b-1) und dem zweiten Ende (16b-2; 116b-2) in wenigstens einem Abschnitt entlang des Leerguttransportweges (T) eine negative Steigung aufweist.

2. Leergutannahmevorrichtung (10) nach Anspruch 1, wobei die Führungsbahn (16b) zwischen dem ersten Ende (16b-1) und dem zweiten Ende (16b-2) entlang des Leerguttransportweges (T) eine konstante negative Steigung aufweist.

3. Leergutannahmevorrichtung (10) nach Anspruch 1, wobei die Führungsbahn (116b) zwischen dem ersten Ende (116b-1) und dem zweiten Ende (116b-2) entlang des Leerguttransportweges (T) eine sich verändernde Steigung aufweist.

4. Leergutannahmevorrichtung (10) nach Anspruch 3, wobei die Führungsbahn (116b) am ersten Ende (116b-1) eine negative erste Steigung und am zweiten Ende (116b-2) eine negative zweite Steigung aufweist, wobei die erste Steigung einen größeren Betrag als die zweite Steigung aufweist.

5. Leergutannahmevorrichtung (10) nach Anspruch 3, wobei die Führungsbahn am zweiten Ende eine positive Steigung oder eine Steigung von im Wesentlichen Null aufweist.

6. Leergutannahmevorrichtung (10) nach einem der Ansprüche 1 bis 5, wobei das Führungselement (16a) zu dem zweiten Ende (16b-2) der Führungsbahn (16b) hin abschüssig geneigt ist.

7. Leergutannahmevorrichtung (10) nach einem der Ansprüche 1 bis 6, ferner aufweisend eine um eine Trommelachse (A) drehbare Trommel (20), die an einem ersten Seitenwandabschnitt (12-1) der Seitenwandanordnung (12-1, 12-2) bereitgestellt ist, wobei der Boden (18) einen flexiblen Boden aufweist, der aus einer flexiblen Materialbahn (19) gebildet ist, die an einem ersten Endabschnitt mit der Trommel (20) verbunden ist und durch eine Drehung der Trommel (20) auf die Trommel (20) aufwickelbar oder von der Trommel (20) abwickelbar ist und an einem zweiten Endabschnitt mit einem zweiten Seitenwandabschnitt (12-2) der Seitenwandanordnung (12-1, 12-2) verbunden ist, optional lösbar verbunden ist.

8. Leergutannahmevorrichtung (10) nach Anspruch 7, ferner aufweisend eine um eine Umlenktrommelachse (B) drehbare Umlenktrommel (21) zum Führen der flexiblen Materialbahn (19) zu der Trommel (20).

9. Leergutannahmevorrichtung (10) nach Anspruch 8, wobei die flexible Materialbahn (19) derart an der Umlenktrommel (21) und der Trommel (20) geführt ist, dass der flexible Boden (18) durch eine gleichsinnige Drehung der Trommel (20) und der Umlenktrommel (21) höhenverstellbar ist.

10. Leergutannahmevorrichtung (10) nach einem der Ansprüche 7 bis 9, wobei das Führungselement (16a) an dem ersten Seitenwandabschnitt (12-1) bereitgestellt ist, optional in Schwerkraftrichtung oberhalb der Trommel (20) bereitgestellt ist.

11. Leergutannahmevorrichtung (10) nach einem der Ansprüche 1 bis 10,
ferner aufweisend eine Steuervorrichtung (24) sowie einen ersten und einen zweiten mit der Steuervorrichtung (24) in Signalaustauschverbindung stehenden Füllstandsensor (22a, 22b), die dazu eingerichtet sind, einen Leergutfüllstand an mehreren Positionen in dem Aufnahmebehälter (12) zu erfassen und den Leergutfüllstand widerspiegelnde Füllstandsignale an die Steuervorrichtung (24) auszugeben, wobei die Steuervorrichtung (24) dazu eingerichtet ist, eine Drehung der Trommel (20) zum Aufwickeln oder Abwickeln der flexiblen Materialbahn (19) nach Maßgabe der Füllstandsignale zu steuern.

12. Leergutannahmevorrichtung (10) nach Anspruch 11 und einem der Ansprüche 7 bis 10, wobei ein Abstand des ersten Füllstandsensors (22a) zu dem ersten Seitenwandabschnitt (12-1) kleiner als ein Abstand des ersten Füllstandsensors (22a) zu dem zweiten Seitenwandabschnitt (12-2) ist.

13. Leergutannahmevorrichtung (10) nach Anspruch 12, wobei ein Abstand des zweiten Füllstandsensors (22b) zu dem ersten Seitenwandabschnitt (12-1) größer als der Abstand des ersten Füllstandsensors (22a) zu dem ersten Seitenwandabschnitt (12-1) ist.
